# EUROPÄISCHE PATENTANMELDUNG

(11) **EP 3 231 280 A1**
(43) Veröffentlichungstag der Anmeldung: **18.10.2017**
(21) Anmeldenummer: 17166563.1
(22) Anmeldetag: 13.04.2017
(51) Int. Cl.: A01K 9/00

(54) **TRÄNKEIMER**

(30) Priorität: 14.04.2016 DE 102016106938; 11.11.2016 DE 102016121641
(71) Anmelder: HIKO GmbH, 87435 Kempten (DE)
(72) Erfinder: Hinterkopf, Martin, 89081 Ulm-Lehr (DE)
(74) Vertreter: Baur & Weber Patentanwälte PartG mbB

(57) **Zusammenfassung**

Es wird ein Tränkeimer (TE) zum Tränken von Tieren, insbesondere bei der Aufzucht von Kälbern oder Lämmern beschrieben, der in einer Eimerwand (EW) eine Öffnung (BA) zur Aufnahme eines Saugzapfens (SZ) aufweist und auf der der Öffnung gegenüber liegenden Seite wenigstens einen Durchbruch (DB) zur Befestigung des Tränkeimers aufweist, wobei die Eimerwand an der der Öffnung zugewandten Seite und an der dem wenigstens einen Durchbruch (DB) zugewandten Seite jeweils abgeflacht sind, wobei der Tränkeimer wenigstens teilweise aus einem Kunststoffmaterial besteht, welchem ein antimikrobielles Additiv zugefügt ist.

## Beschreibung

Die Erfindung betrifft einen Tränkeimer, insbesondere zur Aufzucht von Tieren, wie z. B. Kälber oder Lämmer.

Tränkeinrichtungen in Form eines Eimers sind aus dem Stand der Technik bereits bekannt. So ist in der DE 87 12 611 U1 ein Eimer zum Tränken von Tieren beschrieben, der einen Saugzapfen an einer die Eimerwand durchdringenden Durchführung und eine Einrichtung zum Einhängen des Eimers in eine Tragvorrichtung aufweist, wobei die Einrichtung zum Einhängen wenigstens je einen Durchbruch in der Eimerwand auf der Seite des Saugzapfens und der gegenüber liegenden Seite und wenigstens einen Durchbruch in einer unterhalb des Eimerbodens liegenden Randzone aufweist.

Derartige Tränkeimer haben sich aufgrund ihrer Form und wegen ihrer einfachen Handhabung in der landwirtschaftlichen Praxis, insbesondere zum Tränken von Kälbern und Lämmern seit vielen Jahrzehnten bewährt und werden auch von zahlreichen anderen Herstellern angeboten.

Ein Problem, welches die auf dem Markt verfügbaren Tränkeimer nicht lösen, betrifft die Vermehrung von Krankheitserregern im Inneren der Tränkeimer. In diesem, der sinngemäßen Nutzung bedingt, feuchten Milieu kommt es rasch zur Vermehrung von Krankheitserregern wie Bakterien, Pilzen, Viren oder ähnlichem, welche die Tiergesundheit gefährden. Insbesondere Jungtiere wie Lämmer oder Kälber erkranken bedingt durch ihr noch nicht vollständig ausgebildetes Immunsystem häufig an intestinalen (darmassoziierten) Erkrankungen, welche beispielsweise durch den gramnegativen Erreger Escherichia Coli (E. coli) verursacht werden. Wegen der natürlichen Herdenbildung werden diese Erkrankungen, deren Symptome für den Landwirt erst spät zu erkennen sind, schnell an andere Jungtiere übertragen. Die Konsequenz aus dieser zunächst nicht letalen Erkrankung für die Jungtiere ist, dass sie in den für die Entwicklung wichtigen ersten Wochen und Monaten nach der Geburt, zu wenig Gewicht zulegen. Für den Landwirt bleibt schon aus Tierschutzgründen häufig nur die Isolation der erkrankten Tiere von der Herde und anschließende Not-schlachtung. Eine Behandlung mit geeigneten Antibiotika führt je nach Ausprägung des Krankheitsbildes häufig nicht zum gewünschten Erfolg oder wird aus Gründen der Wirtschaftlichkeit nicht in Erwägung gezogen.

Ausgehend von diesem Problem hat sich der Erfinder nun die Aufgabe gestellt, die Gesundheit der Tiere durch eine Steigerung der Stallhygiene zu verbessern.

Diese Aufgabe wird durch die Merkmale des Patentanspruchs 1 gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird ein Tränkeimer zum Tränken von Tieren, insbesondere bei der Aufzucht von Kälbern oder Lämmern, geschaffen, der in einer Eimerwand eine Öffnung zur Aufnahme eines Saugzapfens aufweist und auf der der Öffnung gegenüber liegenden Seite wenigstens einen Durchbruch zur Befestigung des Tränkeimers aufweist, wobei die Eimerwand an der der Öffnung zugewandten Seite und an der dem wenigstens einen Durchbruch zugewandten Seite jeweils abgeflacht sind, wobei der Tränkeimer wenigstens teilweise aus einem Kunststoffmaterial besteht, wobei dem Kunststoffmaterial ein antimikrobielles Additiv zugefügt ist.

Die erfindungsgemäße Lösung stellt somit einen Tränkeimer bereit, bei welchem durch die antimikrobielle Funktion des verwendeten Kunststoffes die Vermehrung und Bildung von Krankheitserregern wie Bakterien oder ähnlichem eingedämmt wird. Ferner ist es sogar möglich den Gesamtgehalt an Krankheitserregern bis auf ein Minimum, nahe an der vollständigen Keimfreiheit, zu reduzieren, wenn die mittlere Lebensdauer von Erregern unter deren mittlere Reproduktionsdauer gesenkt wird. Dies kann durch die mengenmäßige Beigabe von antimikrobiellen Wirkstoffen zum Kunststoff des Tränkeimers reguliert werden. Insgesamt führt dies zu einer Steigerung der Stallhygiene, was sich in einer Verbesserung der Gesundheit der Tiere und in einem größeren wirtschaftlichen Nutzen für den Landwirt bemerkbar macht. Auch kann der Einsatz von Medikamenten und Antibiotika reduziert werden, was sich in einer Qualitätssteigerung der Endprodukte wie Milch- und Fleischerzeugnisse äußert.

Gemäß einer Ausführungsform der Erfindung ist der Tränkeimer vollständig aus dem Kunststoffmaterial gefertigt.

Der Tränkeimer ist demnach vollständig aus dem antimikrobiellen Kunststoffmaterial gefertigt und besitzt keine Stellen, welche durch das Fehlen der antimikrobiellen Wirkung als Brutherde für Krankheitserreger prädestiniert sind. In wiederum anderen Ausführungen kann es jedoch möglich sein, durch die Verwendung unterschiedlicher Kunststoffmaterialien eine lediglich teilweise vorhandene antimikrobielle Wirkung zu erzielen. Vorstellbar ist beispielsweise nur die Innenseite des Tränkeimers mit dem antimikrobiellen Kunststoff zu beschichten oder allgemein zu versehen.

Gemäß einer weiteren Ausführungsform, kommt ein antimikrobielles Additiv auf Metallbasis zum Einsatz.

Verschiedenste Metalle verfügen über sogenannte olygodynamische Eigenschaften. Dies bedeutet vereinfacht, dass Metallkationen sich aus dem Metallverbund lösen können und in das Innere von Krankheitserregern wie beispielsweise Bakterien, Pilzen oder Viren gelangen. Dies führt zum Tod des Erregers. Da bisherige Untersuchungen den Schluss nahe legen, dass Kationen unterschiedlicher Metalle unterschiedlich effektive Wirkungen auf unterschiedliche Krankheitserreger haben, ist es vorstellbar unterschiedliche Metalle wie zum Beispiel Kupfer und Silber als antimikrobielles Additiv einzusetzen. Hierdurch kann der Umfang der Wirkung auf unterschiedliche Krankheitserreger oder unterschiedliche Stämme einzelner Erreger erweitert werden.

Gemäß einer weiteren Ausführungsform der Erfindung, verfügt der Tränkeimer an seiner Öffnung ein Haltemittel für einen Saugzapfen, wobei das Haltemittel ebenfalls aus einem Kunststoff mit antimikrobieller Wirkung besteht.

Dies ist gerade deshalb sinnvoll, weil die Öffnung in Fließrichtung einer Nah-rungsflüssigkeit wie beispielsweise Milch dem zu tränkenden Tier am nächsten ist. Eine mikrobielle Belastung der Umgebung der Öffnung würde daher am wahrscheinlichsten zu einer Infektion des Tiers durch die Krankheitserreger führen. Insbesondere kann das Haltemittel so ausgeführt sein, dass es sich einfach sowie gründlich reinigen lässt und keine Hinterschneidungen oder Flächen aufweist, in, auf oder an denen sich stehende Flüssigkeiten bilden können.

Gemäß einer weiteren Ausführungsform der Erfindung werden nicht aus Kunststoff gefertigte Teile des Tränkeimers aus Metallen gefertigt, die eine olygodynamische Wirkung aufweisen.

Vorstellbar ist es zum Beispiel den Durchbruch zur Befestigung des Eimers mit einer Metallöse zu verstärken, sodass auch bei maximaler Befüllung des Tränkeimers und unter Wirkung mechanischer Belastung ein Einreißen des aus Kunststoff gefertigten Eimers vermieden wird. Ferner kann der Tränkeimer über einen Tragebügel aus Metall verfügen.

Gemäß einer weiteren Ausführungsform der Erfindung ist die Öffnung in der Nähe zu einer Unterseite des Tränkeimers angeordnet.

Derartige Tränkeimer tropfen in der Leerstellung aus, so dass keine Verschmutzungen auftreten beziehungsweise Verschmutzungen reduziert werden. Dies unterstützt neben der antimikrobiellen Wirkung des Kunststoffs an sich die Vermeidung von Krankheitserregern. Die Erfindung lässt sich auch bei so ausgestalteten Tränkeimern einsetzen.

Gemäß einer weiteren Ausführungsform der Erfindung ist die Öffnung in der Nähe zu einer Oberseite des Tränkeimers angeordnet.

Die Positionierung der Öffnung in der Nähe einer Oberseite des Tränkeimers führt zu einem Erschweren des Saugens bei dem Tier, so dass der Saugprozess länger andauert und folglich anstrengender ist. Dies führt zu mehr Speichelfluss und damit besserer Verdauung, was wiederum die Resistenz des Tieres gegen Krankheitserreger steigert. Die Erfindung lässt sich auch bei derartig ausgestalteten Tränkeimern einsetzen.

Gemäß einer weiteren Ausführungsform der Erfindung sind mehrere, insbesondere drei oder fünf Öffnungen vorgesehen.

Demnach werden Tränkeimer geschaffen, die eine unterschiedliche Zahl bzw. Position von Saugzapfen aufweisen, so dass je nach gewünschtem Einsatzgebiet die jeweils passende Konfiguration ausgewählt sein kann. Sinnvoller Weise verfügt ein Tränkeimer über die der Anzahl an Öffnungen für Saugzapfen entsprechende Anzahl an Haltemitteln.

Der Tränkeimer kann eine Füllmenge von bis zu 13 Litern, vorzugsweise ungefähr 9 Liter, aufweisen.

Gemäß einem Verfahren zur Herstellung der Erfindung, liegt der Kunststoff, aus welchem der Eimer gefertigt wird, in einer Granulatform vor. Dieses Granulat kann beispielsweise durch ein Spritzgussverfahren wie es allgemein bekannt ist, gefertigt werden. Als Kunststoffe kommen für das Granulat insbesondere Polyolefine in Frage. Diese erlauben es den Eimer in beliebiger Farbausführung zu gestalten, verfügen aber auch über eine hohe mechanische Belastbarkeit. Die Verwendung anderer Thermoplaste, Duroplaste oder Elastomere ist jedoch nicht ausgeschlossen.

Gemäß einem weiteren Verfahrensschritt zur Herstellung der Erfindung, wird dem Kunststoffgranulat ein weiteres Granulat beigemischt, welches die antimikrobiellen Bestandteile trägt.

Dieses weitere Granulat, das sogenannte Trägergranulat, kann dem Kunststoffmaterial des nicht antimikrobiellen Granulats entsprechen, muss dies aber nicht. Das Trägergranulat und das Granulat werden vor der Fertigung miteinander vermischt, sodass die antimikrobielle Wirkung der Bestandteile des Trägergranulats gleichmäßig auf jeden Teil des fertigen Tränkeimers verteilt wird. Durch die mengenmäßige Beigabe an Trägergranulat zum Granulat kann ferner die antimikrobielle Wirkung des fertigen Tränkeimers beeinflusst werden. Üblicher Weise werden zwischen 1 bis 2 Volumenprozent des Trägergranulats beigemischt. Es kann aber auch mehr oder weniger beigefügt werden. Anstatt das Trägergranulat und das Granulat vor dem Fertigungsprozess zu vermischen, können das Trägergranulat und das Granulat auch parallel aber in unterschiedlichen Mengen in eine Press- oder Spritzform gegeben werden.

Ein weiterer Verfahrensschritt zur Herstellung der Erfindung beinhaltet die Zugabe eines dritten Granulats, dem sogenannten Funktionsgranulat zum Trägergranulat oder dem Granulat.

Dieses Funktionsgranulat besteht aus einem Kunststoff, der eine hydrophobe Wirkung aufweist. Der hierdurch entstehende Lotusblüteneffekt sorgt im Endprodukt dafür, dass sich keine Flüssigkeitstropfen bilden können, welche Krankheitserregern ein ideales Brutmilieu bieten würden. Die mengenmäßige Zugabe des Funktionsgranulats orientiert sich wie schon beim Trägergranulat an der zu erzielenden Wirkung. Es bietet sich verfahrensmäßig zum einen die Durchmischung von Funktionsgranulat, Granulat und oder Trägergranulat an zum anderen können aber Funktionsgranulat, Granulat und oder Trägergranulat parallel aber in unterschiedlichen Mengen in eine Press- oder Spritzform gegeben werden.

Des Weiteren werden Zubehörteile für einen oben beschriebenen Tränkeimer angegeben, bei welchem bei der Herstellung einem Kunststoffgranulat ein Trägergranulat, welches das antimikrobielle Additiv beinhaltet, beigemischt ist.

Nachfolgend wird ein Ausführungsbeispiel anhand der Zeichnung näher erläutert. Es zeigt:

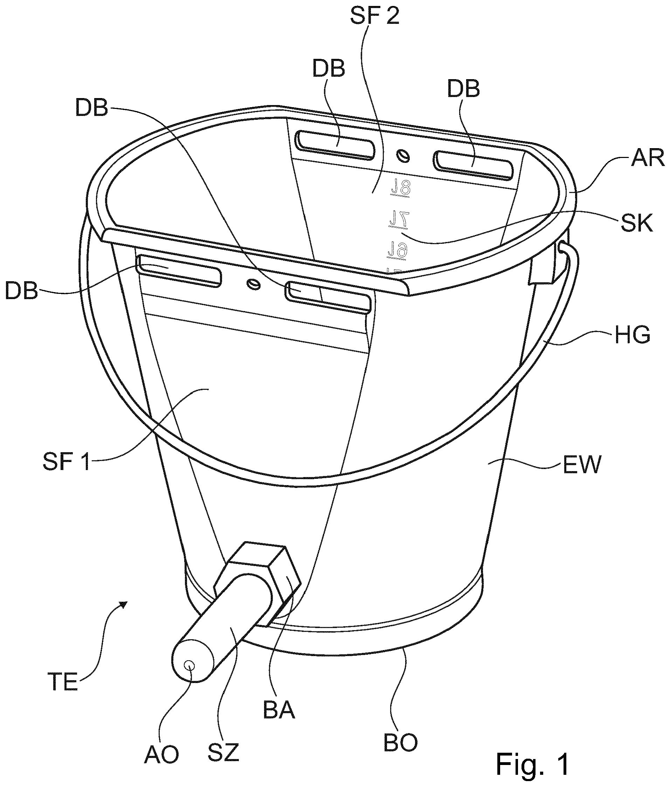

- Fig. 1: schematisch ein Tränkeimer gemäß einem Ausführungsbeispiel der Erfindung in einer perspektivischen Seitenansicht.

In Fig. 1 ist in einer perspektivischen Seitenansicht eine mögliche Ausführungsform der Erfindung gezeigt. Der dargestellte Tränkeimer TE besitzt eine annähernd runde oder absolut runde Grundfläche, die durch den Boden BO ausgebildet ist.

Nach oben hin ist der Tränkeimer TE durch den Abschlussring AR, welcher auf zwei gegenüberliegenden Seiten parallel verlaufende Kanten aufweist, begrenzt. Unterhalb des Abschlussringes AR sind spiegelbildlich entlang der geraden Seiten Durchbrüche DB vorgesehen, mit welchen der Tränkeimer TE gehalten, getragen oder aufgehängt werden kann. Des Weiteren ist an der Außenseite des Tränkeimers TE knapp unterhalb des Abschlussringes AR eine Ausformung vorgesehen, welche der Aufnahme des Haltegriffes HG dient. Am Haltegriff HG kann der Tränkeimer getragen werden.

Der mittlere Bereich des Tränkeimers TE zwischen Abschlussring AR und Boden BO besteht aus den Seitenflächen SF1 und SF2 sowie der Eimerwand EW und dem Befestigungsanschluss BA, an welchem ein Saugzapfen SZ derart befestigt werden kann, dass die Austrittsöffnung AO des Saugzapfens SZ vom Tränkeimer TE weg weist. Die Seitenflächen SF1 und SF2 sind unterhalb der geraden Strecken des Abschlussringes AR ausgebildet, wobei die Seitenfläche SF1 auf der Seite des Saugzapfens SZ und die Seitenfläche SF2 gegenüber sitzt.

Durch die Abflachung des Tränkeimers TE entlang der Seitenfläche SF2 ist es möglich, den Tränkeimer TE an einer Wand formschlüssig aufzuhängen. Ferner verfügt die Seitenfläche SF2 über eine Skala SK, die es ermöglicht den Füllstand abzulesen. Der Nutzen der Seitenflächen SF1 erschließt sich daraus, dass es auch möglich sein soll, den Tränkeimer an einem Tiergatter von außen derart anzubringen, dass der Saugzapfen SZ in das Innere des Gatters weist. Idealer Weise wird der Durchmesser des kreisförmigen Bodens BO so gestaltet, dass dieser geringer ist als der lotrechte Abstand zwischen den beiden parallelen geraden Seiten des Abschlussringes AR. Diese Dimensionierung ermöglicht es, mehrere Tränkeimer TE ineinander zu stapeln.

Erfindungsgemäß sind die Kunststoffbestandteile, zu mindestens teilweise, aus einem antimikrobiellen Kunststoff gefertigt. Der Haltegriff HG kann darüber hinaus aus einem Metall gefertigt sein, welches olygodynamische Eigenschaften aufweist. Ferner können die Durchbrüche DB mit innen-umlaufenden Metallösen verstärkt werden um ein Einreißen des Eimers im Bereich der Durchbrüche DB zu verhindern.

Weitere Gestaltungsmöglichkeiten bedienen sich dem bekannten Formenschatz für derartige Tränkeimer. So kann es vorgesehen sein und ist je nach Einsatzort des Tränkeimers TE zweckmäßig, nur eine oder keine Seitenfläche abzuflachen. Ferner kann es vorgesehen sein, dass der Tränkeimer eine eckige oder elliptische Grundfläche und oder Körperfläche besitzt, über mehr als einen Saugzapfen verfügt, der oder die Saugzapfen anders als in Fig. 1 dargestellt im oberen oder mittleren Bereich des Tränkeimers TE angebracht sind.

Es erscheint in jedem Fall zweckmäßig, dass die Innenseite des Tränkeimers TE so konstruiert und gefertigt wird, dass sich im teilentleerten oder leeren Zustand des Eimers keine Pfützen bilden. Diese Vermeidung von stehenden Flüssigkeiten, welche als Herd für Krankheitserreger dienen können, wird durch eine hydrophobe Eigenschaft des Kunststoffes verstärkt. Ebenso ist bezüglich der Gestaltung und Lage der mehreren Durchbrüche DB eine Vielzahl von Variationsmöglichleiten gegeben, so dass die gezeigte spezielle Ausführungsform des Tränkeimers TE nicht einschränkend interpretiert werden sollte.

Die Formgebung des Tränkeimers TE ermöglicht es, ihn aus einem Stück in einem Spritzgussverfahren zu fertigen. Hierzu wird ein Gemisch aus einem Granulat des gewünschten Kunststoffes, einem Trägergranulat, welches ein antimikrobiellen Wirkstoff beinhaltet, und einem Funktionsgranulat, welches aus einem Kunststoff mit hydrophoben Eigenschaften besteht einer Spritzgussmaschine zugeführt. Der mengenmäßige Anteil des Granulats, des Funktionsgranulats und des Trägergranulats orientieren sich an der gewünschten Wirkung.

Neben der Herstellung des Tränkeimers TE aus einem Granulat des gewünschten Kunststoffes mit dem Trägergranulat, welches den antimikrobiellen Wirkstoff beinhaltet, ist es ebenfalls denkbar, weitere Zubehörteile des Tränkeimers TE zu fertigen. So könnte ein Deckel für den Tränkeimer TE vorgesehen sein, der ebenfalls mit einem antimikrobiellen Wirkstoff versehen ist. Ebenso können auch Ventile, Sauger, Halteplatten, Steigrohre, Rückschlagventile, Schlauchleitungen oder Wandsysteme mit Schlauchzuführungen an eine Saugstelle mit antimikrobiellem Wirkstoff versehen sein. Eine Beimischung kann dabei analog zu der hier im Detail beschriebenen Vorgehensweise erfolgen.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Tränkeimer zum Tränken von Tieren, insbesondere bei der Aufzucht von Kälbern oder Lämmern, der in einer Eimerwand eine Öffnung zur Aufnahme eines Saugzapfens aufweist und auf der der Öffnung gegenüber liegenden Seite wenigstens einen Durchbruch zur Befestigung des Tränkeimers aufweist, wobei die Eimerwand an der der Öffnung zugewandten Seite und an der dem wenigstens einen Durchbruch zugewandten Seite jeweils abgeflacht sind, **dadurch gekennzeichnet, dass** der Tränkeimer wenigstens teilweise aus einem Kunststoffmaterial gefertigt ist, wobei dem Kunststoffmaterial ein antimikrobielles Additiv zugefügt ist.

2. Tränkeimer nach Anspruch 1, der vollständig aus dem Kunststoffmaterial gefertigt ist.

3. Tränkeimer nach Anspruch 1 oder 2, dessen antimikrobielles Additiv auf Metallbasis ist, insbesondere auf Silberbasis.

4. Tränkeimer nach einem der Ansprüche 1 bis 3, dessen Öffnung ein Haltemittel für einen Saugzapfen aufweist, wobei das Haltemittel ebenfalls über eine antimikrobielle Wirkung verfügt.

5. Tränkeimer nach einem der Ansprüche 1 bis 4, dessen nicht aus Kunststoff gefertigte Teile aus einem olygodynamischen Metall, insbesondere Kupfer und Edelstahl bestehen.

6. Tränkeimer nach einem der Ansprüche 1 bis 5, bei dem die Öffnung in der Nähe einer Unterseite des Tränkeimers angeordnet ist.

7. Tränkeimer nach einem der Ansprüche 1 bis 5, bei dem die Öffnung in der Nähe einer Oberseite des Tränkeimers angeordnet ist.

8. Tränkeimer nach einem der Ansprüche 1 bis 7, bei dem mehrere, insbesondere drei oder fünf Öffnungen vorgesehen sind.

9. Tränkeimer nach einem der Ansprüche 1 bis 8, der eine Füllmenge von bis zu 13 Litern, vorzugsweise ungefähr 9 Liter, aufweist.

10. Verfahren zur Herstellung eines Tränkeimers nach einem der Ansprüche 1 bis 9, bei welchem der Tränkeimer aus einem Kunststoffgranulat, insbesondere aus Polyolefinen, gefertigt wird.

11. Verfahren zur Herstellung eines Tränkeimers nach Anspruch 10, bei welchem dem Kunststoffgranulat vor der Fertigung ein Trägergranulat, welches das antimikrobielle Additiv beinhaltet, beigemischt wird.

12. Verfahren zur Herstellung eines Tränkeimers nach Anspruch 10 oder 11, bei welchem dem Kunststoffgranulat ein Funktionsgranulat beigemischt wird, welches beim fertigen Tränkeimer eine hydrophobe Oberflächenbeschaffenheit verursacht.

13. Zubehörteile für einen Tränkeimer nach einem der Ansprüche 1 bis 9, bei welchem bei der Herstellung einem Kunststoffgranulat ein Trägergranulat, welches das antimikrobielle Additiv beinhaltet, beigemischt ist.

14. Zubehörteil nach Anspruch 13, die als Ventile, Sauger, Halteplatten, Steigrohre, Rückschlagventile, Schlauchleitungen oder Wandsysteme mit Schlauchzuführungen an eine Saugstelle bereitgestellt sind.
